Europäisches Patentamt

**European Patent Office** (11) Publication number: **0 057 901**

Office européen des brevets **A2**

(12) **EUROPEAN PATENT APPLICATION**

(21) Application number: **82100747.3**

(22) Date of filing: **03.02.82**

(51) Int. Cl.³: **A 41 C 5/00**
**B 29 H 3/04**

(30) Priority: **05.02.81 US 231770**

(43) Date of publication of application:
**18.08.82 Bulletin 82/33**

(84) Designated Contracting States:
**BE CH DE FR GB LI NL**

(71) Applicant: Spanel, Abram Nathaniel
344 Stockton Street
Princeton New Jersey 08540(US)

(72) Inventor: Spanel, Abram Nathaniel
344 Stockton Street
Princeton New Jersey 08540(US)

(72) Inventor: Barth, Harry J.
377 Cheryl Drive
Tallmadge Ohio 44278(US)

(72) Inventor: Jaggers, Thomas H.P., Jr.
220 Carnoustie Road
Dover Delaware 19901(US)

(74) Representative: Patentanwälte Ruff und Beier
Neckarstrasse 50
D-7000 Stuttgart 1(DE)

(54) **Method and apparatus for manufacturing girdles or the like.**

(57) A method and apparatus for manufacturing latex girdles wherein fabric liners (126) are applied to latex sheaths as a part of the overall girdle production operation. The process involves preparing sheaths, attaching the fabric liners (126) to the sheaths and further processing sheath and liner (126) to eliminate flaws such as wrinkles. The process may be automatic and the apparatus enables a precisely controlled operation.

Fig. 1.

DIP    STAGE    FABRIC    ROLL

Croydon Printing Company Ltd.

- 1 -

METHOD AND APPARATUS FOR MANUFACTURING GIRDLES OF THE LIKE

BACKGROUND OF THE INVENTION

I. Field of the Invention

This invention relates to a process for manufacturing latex garments in particular, foundation garments such as girdles. More specifically, the process relates to the production of a garment wherein a latex article is joined with a fabric article to provide a product with advantages for the wearer. Viewed from the equipment and technique standpoint, the invention relates to a streamlined process utilizing substantially automated equipment to mass-produce articles despite delicate production steps necessitated by the use of disparate materials.

II. Prior Art

In the past, foundation garments, particularly girdles, have been constructed of latex featuring fabric liners. Various constructions were utilized with most products featuring seamed garments having either a seam in the latex sheath or in the fabric lining or in both. Although products with seams were easier to produce, the quality of the garments was diminished from wrinkling and the seams would tend to cause welts on the wearer's body.

Techniques for manufacturing seamless girdles are disclosed in U.S. Patent No. 3,328,222. A number of embodiments are disclosed with the fabric liner being applied to the latex sheath in several different ways. In one embodiment, the fabric was spread over lever arms to enable a sheath bearing form with

2

its outer surface in a tacky condition, to be surrounded by the stretch fabric. The lever arms were then snapped inwardly to cause the fabric to come into contact with the latex prior to the withdrawal of the lever arms relative to the fabric and latex sheath.

A second embodiment involved the stretching of the fabric on a hollow cylinder. A form on which the latex is applied was disclosed as being a frusto-conical member. This form was inserted into the cylinder so as to engage the liner which was stretched over the opening of the cylinder to cause the liner to be inverted onto the conical form as it moved into the cylinder.

A third embodiment discloses a cylinder for stretching the fabric liner which is secured or hung by one of its ends above the cylinder. A frusto conical form member similar to that of the above embodiment is placed within the cylinder and as the cylinder is lowered, the fabric is permitted to come in contact to adhere to the tacky latex surface of the form member.

- 3 -

In the second embodiment described above, it will be appreciated that the narrower end of the frusto-conical form is first inserted into the uniform cylinder which carries the fabric. An annular space is created between the outer-surface of the form and the inner-surface of the edge of the uniform cylinder. As the conical form is further inserted into the cylindrical frame, the annular space therebetween decreases because the diameter of the conical form continues to increase. This creates an ever-changing annular space, which results in non-uniformity and lack of control of the interpenetration of the fabric and the tacky latex film.

In co-pending Application Serial No. 866,092, the use of flat forms which are lowered through frame openings over which the fabric liners are stretched are disclosed. Several different embodiments are disclosed in which the frame has different configurations. In the first embodiment, the frame opening is formed to be dimensionally similar to the size of the form so that relatively close tolerances between form and frame opening are present. In another embodiment, rollers are disclosed adjacent the frame opening so that as the fabric is drawn onto the form, it is rolled simultaneously to eliminate wrinkles and surface irregularities. In the third embodiment, brushes are utilized in place of the rollers to facilitate the application of the fabric to the form as the form passes by the brushes.

0057901

- 4 -

While the structure of co-pending Serial No. 866,092, described above has distinct advantages over prior art techniques such as described in U.S. Patent 3,328,222, nevertheless, in-of-itself, the structure disclosed therein is not readily adaptable to a relatively automated process.

- 5 -

## SUMMARY OF THE INVENTION

It is an object of the subject invention to provide apparatus and a method of use in which seamless foundation garments having seamless fabric liners can be commercially produced through relative automation.

It is a further object of the subject invention to provide apparatus and a method of use to produce large quantities of high quality foundation garments rapidly and efficiently without time-consuming hand operations.

It is yet a further object of the subject invention to provide an improved girdle product while similtaneously improving the quantity produced, and the speed in which they are so produced.

Briefly, the subject invention comprises assembly apparatus which is utilized for securing fabric liners to tacky latex sheaths which are to be used for girdles and similar types of garments. The apparatus includes a first station where forms, which are covered by a latex sheath, are dipped to provide a tacky coating of latex suitable to receive and bind a fabric liner thereto. An optional staging area may be provided. A next station is provided which includes frames, having openings over which fabric liners are to be stretched and includes means for relative movement of forms in relation to the frames to enable the fabric to be transfered to the forms. In the prefered embodiment, the frames are positioned on a vertically adjustable platform which can be raised to cause the frame openings to

6 -

encircle the forms and thereby causing the fabric to be inverted as it is transferred from frame to form.

A third station provides for brush-like rollers rotatably mounted including means for relative movement of the forms carrying the fabric liners and the rollers so that the fabric can be rolled, thus eliminating pain-causing wrinkles and the like. In the prefered embodiment rollers are mounted on an adjustable platform which includes means to raise the rollers along the sides of the fabric covered forms thereby causing the fabric to be rolled smoothly against the forms to eliminate the mentioned wrinkles and achieve controlled penetration of the latex into the fabric.

The subject apparatus includes a transportation system for automatically moving the forms through the series of stations. Improved apparatus for controlling and maintaining the precise alignment of the forms throughout the production steps, is disclosed.

- 7 -

BRIEF DESCRIPTION OF THE DRAWINGS

For the purpose of illustrating the invention, there are shown in the drawings, forms of the invention which are presently preferred; it being understood, however, that this invention is not limited to the precise arrangements and instrumentalities shown.

Fig. 1 is a front elevational view showing schematically the assembly apparatus which comprises the subject invention on which fabric liners are applied to latex forms;

Fig. 2 is a top view taken along the lines of 2-2 of Fig. 1 in which portions of the assembly apparatus are shown sectionally.

Fig. 3 is an enlarged sectional view taken along the lines 3-3 of Fig. 1 which shows a side view of the fabric attachment station;

Fig. 4 is a front view of the fabric application station of Fig. 3 showing in detail the front row of forms and corresponding frames bearing fabric liners and including a cutaway portion showing the header bar construction.

Fig. 5 is an enlarged sectional view similar to Fig. 3 only the frames are shown in a partially raised position instead of the fully lowered position of Fig. 3.

Fig. 6 is a front view similar to Fig. 4 showing the front row of forms and frames with the frames in the partially raised position of Fig. 5.

- 8 -

Fig. 7 is a top view taken along the lines 7-7 of Fig. 3 showing the fabric stretched over all frames except one;

Fig. 8 is a pictorial perspective view of the forms showing detail of the form and transporting structure and the form relationship to the frame sides.

Fig. 9 is an enlarged sectional view of one of the forms of Fig. 3 showing in detail the form stabilization means and the transportation and stabilization tracks;

Fig. 10 is an enlarged sectional side view taken along the lines 10-10 of Fig. 1 and showing the roll station with the rollers in the fully raised position; and,

Fig. 11 is a front view showing the front row of the forms and rollers of Fig. 10 with the rollers in the fully raised position.

- 9 -

## DETAILED DESCRIPTION OF THE PREFERRED EMBODIMENTS

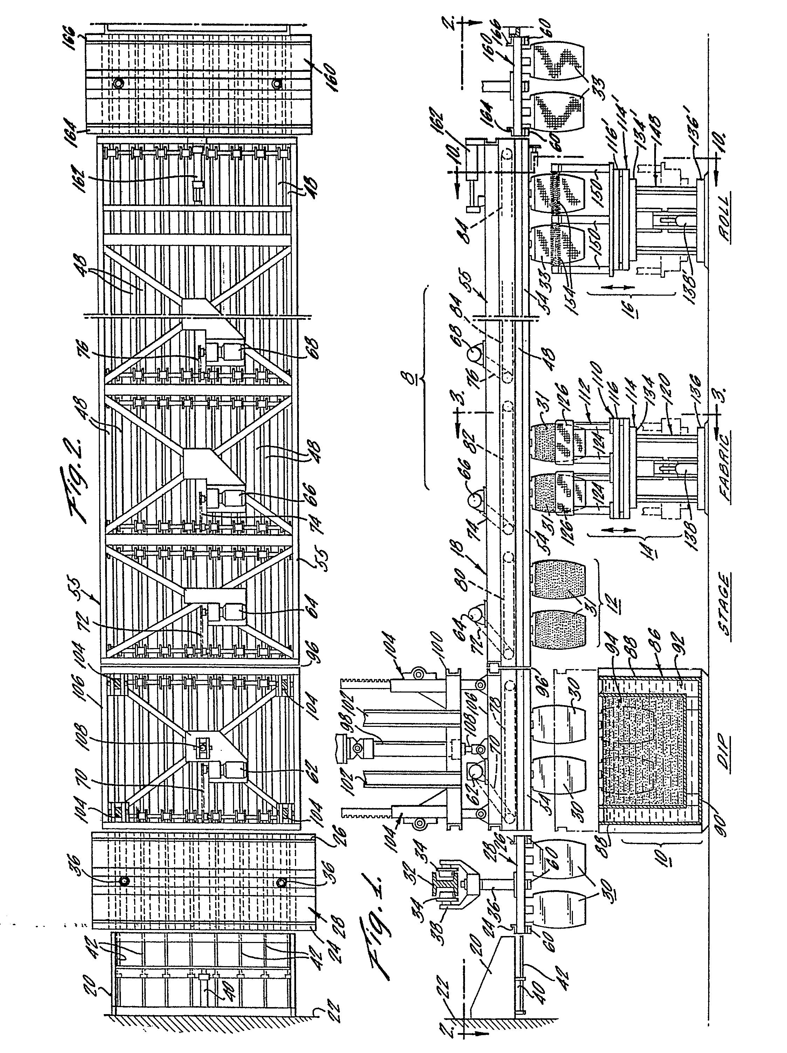

· With reference to Fig. 1, the girdle apparatus
assembly of the subject invention is schematically set forth.
Work stations of the fabric application unit 8 are shown and
labeled as DIP designated by 10; STAGE designated by 12; FABRIC
designated as 14 and ROLL designated as 16. An overhead transportation system 18 is utilized to transport the forms through
the various stations 10, 12, 14 and 16.

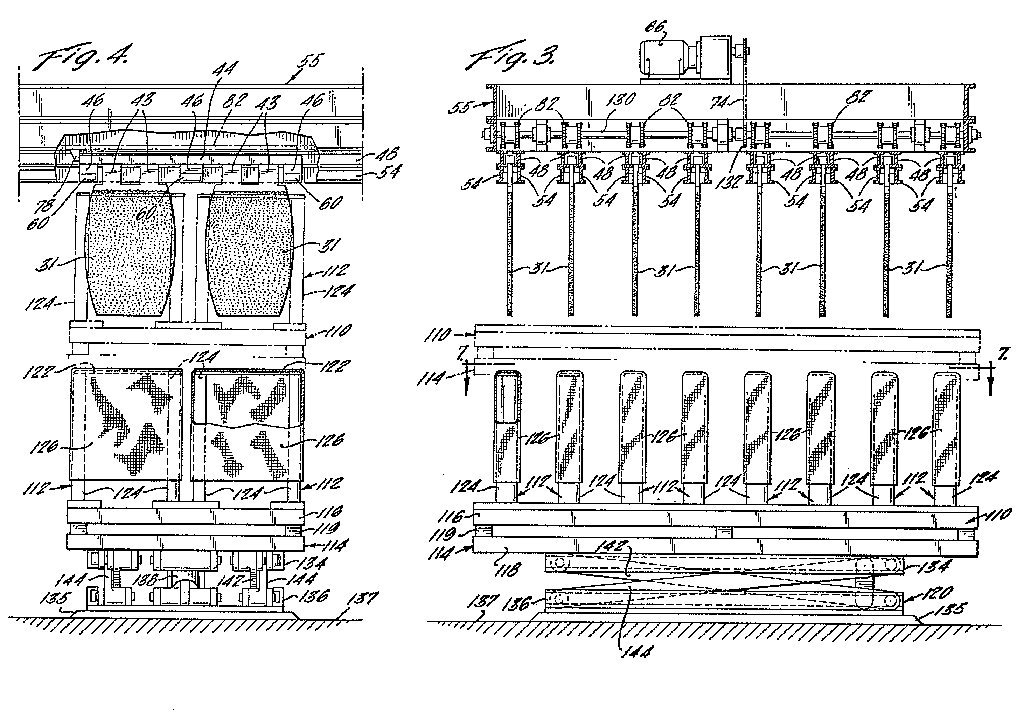

With further reference to Figs. 1 and 2, a support
member 20 is shown attached to wall 22. Adjacent support member
20 are tracks 24 and 26 along which batch cars 28 are advanced
for production each carrying sixteen forms 30, the front two of
which are seen in Fig. 1. The advancing apparatus comprises an
overhead monorail structure 32 along which guiding units 35
having guidewheels 34 run, the guidewheels being connected to a
central support stem 36 by intermediate support structure 38.
Two guiding units 35 are positioned at the front and back of each
car, the support stems 36 being shown in Fig. 2. The cars 28 can
be either driven by a motor, not shown, or advanced by human
power to alignment with the overhead transportation system 18 of
the fabric application unit 8.

The support member 20 supports the unload cylinder
assembly 40 which comprises a series of rams 42 which may be
hydraulically, pneumatically or otherwise actuated and which
serve to push the forms 30 and their carrying structure (to be

- 10 -

discussed) to the right as shown in Fig. 1 where the forms 30
come under the guidance of the overhead transportation system
18.  For the purposes of better understanding the manner in which
the forms are carried, brief reference should be made to Fig. 8
and the forms 30 shown therein.  The forms 30 are shown having
extensions 43 which are shown to be secured to header bar 44.
Along with the forms 30 and their extensions 43, spacer and
stabilizing blocks 46 are also shown.  The purpose of these
blocks 46 will be described subsequently, however, it should be
noted that the forms 30 and blocks 36 may be secured to the
header bar 44 by any number of means as long as they can be
precisely positioned.  For example, as in the presently discussed
embodiment, header bar 44 may be a hollow bar with a partially
open bottom face to receive the upper portions of the extensions
43 and blocks 46, which upper portions may be of the approximate
size of inner dimensions the bar 44 so as to be slidably mounted
inwardly from the ends of the bar 44.

As described in the preferred embodiment described
herein, a batch car 28 will be positioned as shown in Figs. 1 and
2 having eight rows of forms with each header bar 44 carrying two
forms 30 in the manner shown in Fig. 8.

Thus, when the eight header bars 44 are in proper
alignment with the overhead transportation system 18 as will be
described, the rams 42 of the unload cylinder assembly 40 are
actuated to push against the left end of each header bar 44 or

- 11 -

the left most block 46 carried by the header bar 44 thus causing
the header bar 44 with forms 30 to be pushed to the right within
track guiding means and under the guidance of the overhead
transportation system 18 as will be described.

·With further reference to Figs. 1 and 2 as supplemented as necessary by Figs. 8 and 9, the overhead transportation system 18 comprises a transportation track 48 which may be
constructed of I beams 50 and 52 as shown in Fig. 8. Positioned
below the transportation track 48, a bumper or snubbing track 54
is constructed of two rails 56, 58 which are utilized for
stabilization purposes. With further reference to Figs. 8 and 9,
it will be noted that the blocks 46 have outwardly extending face
portions 60 which are designed to abut against the inner faces of
the rails 56, 58 as shown in Fig. 9. As will become apparent,
the need for precise alignment of the forms 30 is important to a
successful operation and the faces 60 of the stabilizing blocks
46 and the interaction with bumper or snubbing track 54 are
important for stabilization. The effect of the stabilization is
to maintain the forms 30 in a substantially vertical plane
without swaying or lateral motion during critical operations as
will be discussed hereinafter.

With further reference to Figs. 1 and 2, once the
header bars 44 are pushed to the DIP station 10 by rams 42, it
being understood that the header bars 44 travel along and within
transportation tracks 48, the header bars 44 come under the

- 12 -

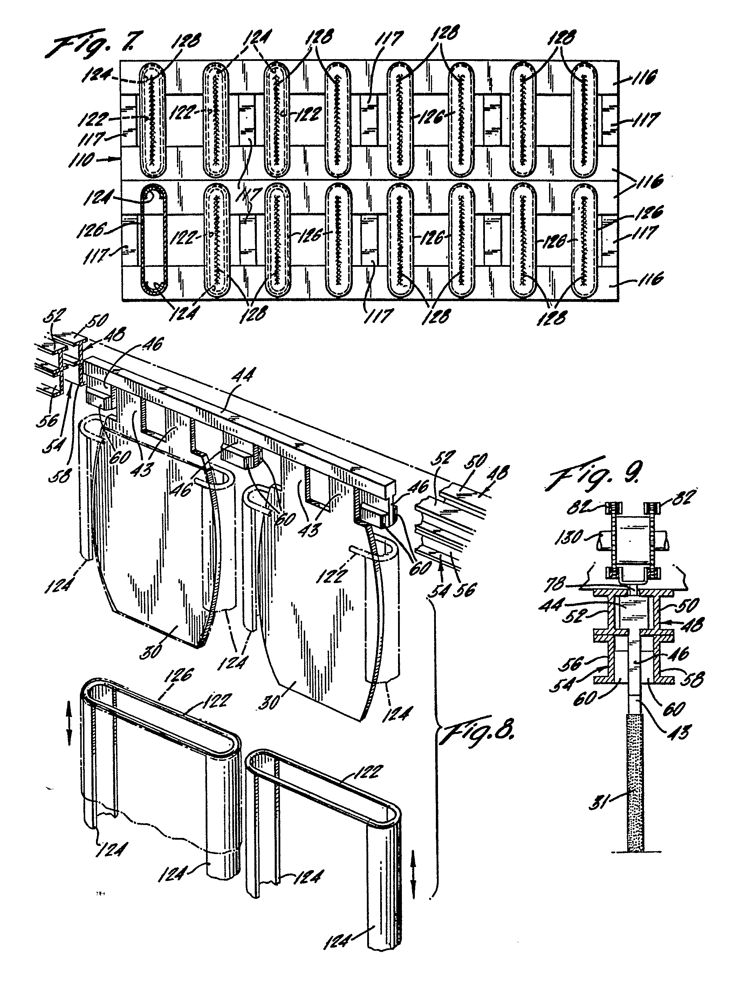

influence of a series of conveying mechanisms. Four conveying motors 62, 64, 66 and 68, by respective drive chains 70, 72, 74 and 76, drive conveyor chains 78, 80, 82, and 84. The conveyor chains 78, 80, 82 and 84 have driving dogs 78, see Fig. 4, which engage and drive the header bars 44. It is to be clearly understood that while the conveying system described herein works well with the fabric application assembly apparatus 8, other equivalent conveying systems could be used as well and the subject invention should not be considered as limited to the type of conveying system described herein.

With further reference to Fig. 1, the DIP station 10 is shown comprising a latex dip tank 86 having sides 88 and bottom 90. A channel area 92 extending within the sides and along the bottom is utilized for carrying coolant to provide a cooling jacket for temperature control over the latex, i.e., to keep the latex cool. The inner dip chamber 94 is filled with latex so that the forms 30 may be dipped therein. A full complement of sixteen forms 30 can be dipped simultaneously by the raising and lowering mechanism for the DIP station 10 as will be hereinafter discussed.

It will be seen that the transportation track 48, bumper rail 54 and overhead support structure 55 above the DIP station 10 are segmented from the remainder of the overhead transportation system 18 by a small channel 96, the segmentation allowing those portions of the support structure 55 and tracks

- 13 -

over DIP station 10 to be lowered and raised. This may be accomplished through a standard hydraulic lift 98. The lift 98 is anchored on support beam 100 which is further secured by support columns 102 which extend to the ceiling not shown. Rack and pinion guides 104 provide the four corners with stabilization and enable the lower lift complex 106 comprising tracks 48 and 54 and support structure 55 along with forms 30, to be rigidly lowered and raised by actuation piston 108 responsive to the dipping requirements as controlled by the hydraulic lift apparatus 98.

As will be explained in more detail subsequently, the forms 30, are brought by batch cars 28 having a latex sheath thereon which will form the body of the foundation garment. The forms 30 are dipped into the latex 94 at DIP station 10 for the purpose of providing a tack on the latex surface. After the forms have been lowered into the latex, allowed to remain there for the required time, and then raised to the original position, they are ready to be transported by conveyor 78 to conveyor 80 to reach the STAGE area 12. It is necessary that the forms 30 remain at a staging or dwell position for a period of time to allow the surface latex to reach tack condition suitable for receiving and binding the fabric liner which will be the following step. The forms 30, once transported to STAGE area 12, are designated as forms 31 to depict forms having tacky surface latex thereon. It is to be appreciated that a separate STAGE area 12

- 14 -

is not necessary and the latex could be permitted to reach its tacky position by allowing the forms to remain untouched either over the dip tank 86 or over the fabric applicators of FABRIC station 14. It is to be appreciated, however, that from the timing standpoint, since a dwell time is necessary, it is convenient to allow the forms to remain in STAGE area 12 while the next batch of forms are being dipped and while the earlier batch of forms are having the liners attached thereto.

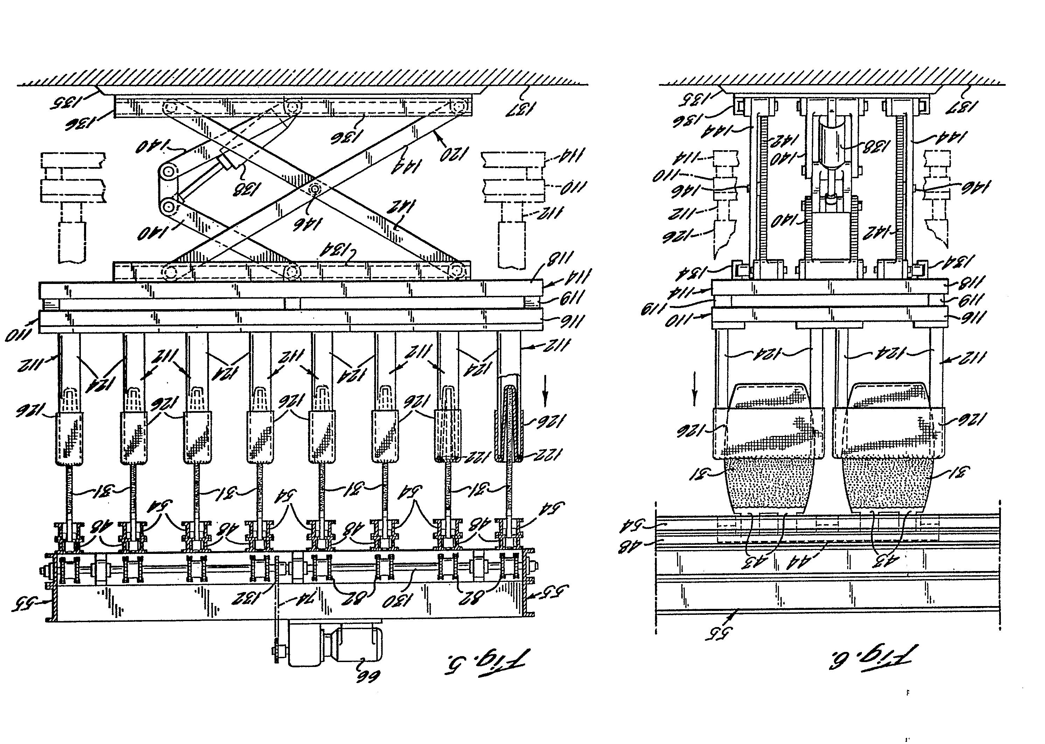

After the latex on the forms 31 reaches its tack condition, the forms are transported from conveyor 80 to conveyor 82 where they are precisely positioned with respect to the fabric applicator apparatus 110 of the FABRIC station 14. As shown in Fig. 3, the fabric applicator apparatus 110 comprises frames 112 which are supported on a hydraulic lift scissors table 114. The hydraulic lift scissors table 114 comprises upper planar longitudinal members 116 joined with cross members 117 (see Fig. 7) supported by vertical members 119 and supporting structure 118, below which hydraulic lift apparatus 120, which will be described elsewhere, is positioned.

The frames 112 are similar to those disclosed in co-pending Application Serial No. 866,092 in that an opening through which the tacky forms 31 pass is provided by wrap-around member 122 which is supported by side support members 124 (See also Fig. 8). Seamless fabric sheath-like pieces 126, which will become the fabric lining of the finished seamless latex girdle,

- 15 -

is stretched over the frames 112. The bottoms are joined, preferably by stitches 128, see Fig. 7, with the stitched top of the sheath being placed over the opening formed by member 122. This seamless fabric liner member 126 which becomes bag-like because of its sewn portion, is preferably a two-way stretch fabric, such as a tricot knit. With reference to Fig. 7 taken in conjunction with Fig. 3, liners 126 are shown positioned over all of the sixteen frames 112 with the exception of the frame in the lower left hand corner as one views Fig. 7.

With further reference to Fig. 3, each of the individual conveying chains 82 is shown in relation to the chain drive shaft 130 and its drive sprocket 132 which is driven by drive chain 74 coming off conveying motor 66. Forms 31 having a tack latex surface are shown extending downwardly from their respective header bars 44 which are in the individual transportation tracks 48 along which the forms are conveyed. As shown the forms 31 are positioned so as to receive the fabric liners 126 from the frames 112 as the frames and the scissored table 114 is raised. As shown in Figure 4, there are two forms in each of the eight rows, which are aligned side-by-side extending downwardly from the header bar 44. The positioning of transportation tracks 48 and stabilization bumper tracks 54 in relationship to the positioning of hydraulic scissors table 114 ensures that the forms 31 will be laterally positioned with precision so that they will be centered as the frames 112 pass upwardly around

- 16 -

them. As shown in orientation of the forms 31 in Fig. 4, the position of forms 31 with respect to the frames 112 is controlled by the distance along track 48 that the header bar 44 is transported by conveying chain 82 and driving dog 78. It will be appreciated that through-proper control, the forms 31 are stopped in precise location so as to be centered between side supports 124 of the frames 112.

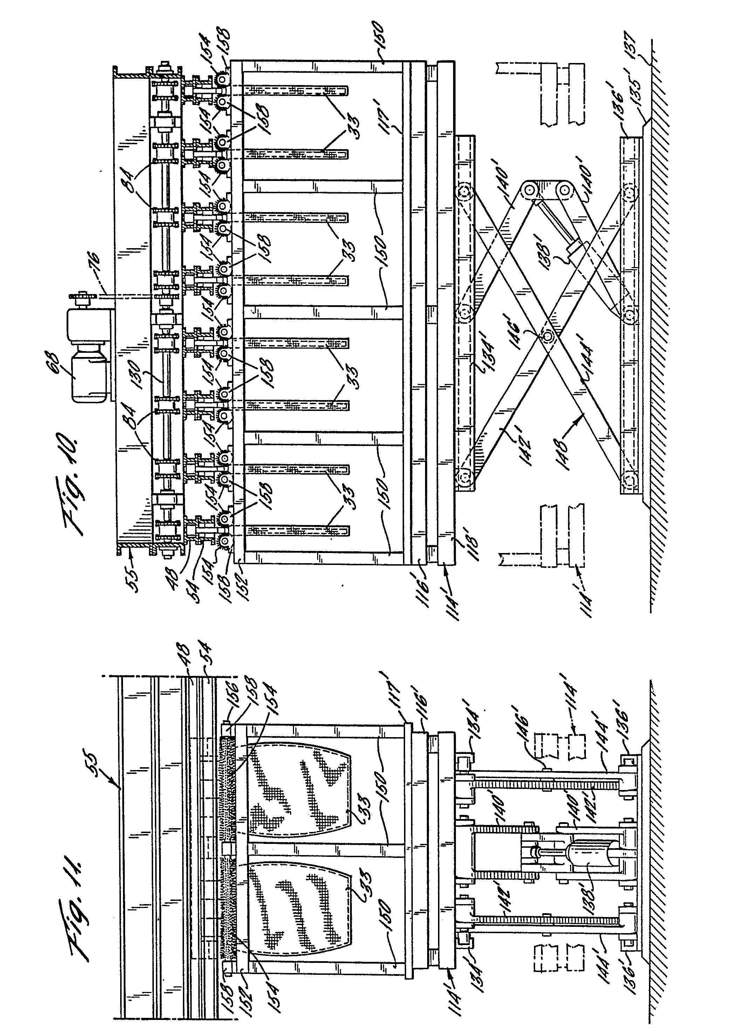

With reference to Figs. 5 and 6, the fabric application station 14, as shown in Figs. 3 and 4, is once again shown, only this time with the hydraulic lift scissors table 114 partially raised showing the frames 112 as they rise around forms 31. As can better be appreciated from Fig. 5 than Fig. 3, the lift apparatus comprises upper support member 134 and lower support member 136 which is mounted on footer 135 resting on floor 137. A hydraulic ram 138 is pivotally mounted to the lower support member 136 and is joined with drive linkage collectively shown as reference numeral 140. Scissor-like support arms 142 and 144 are pivotally mounted to upper and lower support structure 134, 136 and are pivotally joined at their centers by pivot pin 146. It is to be appreciated that many types of different lift structures could be utilized and the hydraulic scissors-type lift structure shown herein, is only representative of an acceptable way of raising the frames 112 precisely and consistently.

With further reference to Fig. 1, it can be appreciated that Fig. 1, the frames 112 are raised to approximately the position of the frames as shown in Figs. 5 and 6. That is, with the liners 126 partially applied to the forms 31. Thus, as shown in Fig. 1, the forms 31 were first transported to the FABRIC station 14 and then, subsequently, the frames 112 were raised and will continue to be raised until the liners 126 are completely applied to form 31. This occurs, as can best be appreciated from Figure 5, when the top of the frames 112 raise to the position to be co-extensive with the top of the forms 31 as shown in Fig. 8 where the frame side supports 124 are shown in phantom with the frame 112 being raised to the full extent possible.

Once the fabric liner 126 has been completely transferred to the forms 31, the hydraulic scissors table 114 retracts, causing the frames 112 to be lowered free and clear of forms 31. New liners 126 may now be placed over frames 112 in preparation for the next series of forms 31 and the forms which now are covered by the liners 126 and designated 33 to connote liner covered forms can be transported to the ROLL station 16 by means of conveyors 82 and 84. It will be appreciated that the FABRIC station 14 could be designed with the overhead transportation system 18 segmented similar to that of DIP station 10 with the system equipped with a lift mechanism so that the forms could be lowered into the frames and not vice versa as is disclosed in the preferred embodiment herein.

- 18 -

As can best be seen in Figs. 10 and 11 taken in conjunction with Fig. 1, the apparatus of ROLL station 16 is similar to that of FABRIC station 14. A hydraulic lift scissors table 148 is provided having essentially the same components as lift table 114 up to and including the upper planar members 116. Above member 116, columns 150 support roller support crossbeams 152 which are joined in rectangular form. Industrial brush rollers 154 are mounted in tandem to correspond to each of the sixteen forms 33 that will be processed simultaneously and positioned to allow passage of a form 33 between each set of rollers 154. The rollers 154 are shown as rotatable about carrying axis 156 which axis is freely rotatable within bearing blocks 158. As shown in Figs. 10 and 11, the hydraulic scissors table 148 is in its fully raised position, with forms 33 bearing the fabric liner having been rolled by rollers 154 as the rollers 154 pass upwardly as the table is raised. The fabric liner and forms 33 will be rolled once again as the table 148 lowers to its retracted rest position.

With reference to the ROLL station 16 of Fig. 1, the rollers 154 are shown raising as the frames 112 of the adjacent FABRIC station 14 are also raising. Thus, in the ROLL station 16 of Figure 1, the rollers 154 will continue to be raised completing the first rolling process until the rollers 154 reach their upper limit at which time they will be lowered, once again, rolling the fabric into the latex on form 33.

- 19 -

With further reference to Figs. 1 and 2, batch
receiving cars 160, receive each batch (eight header bars with
sixteen forms) at the completion of the fabric application steps.
On the particular conveying system disclosed herein, the last
conveyor 84 will not carry the header bars 44 all the way onto
the cars 160. Accordingly, a hydraulic ram 162, having a drive
arm moves laterally behind extensions 43 or spacer bars 46 to
engage a surface against which pressure and movement in the right
hand direction may be exerted. The distance of the ram movement
must be great enough to enable the header bars 44 to clear
transporation track 48 and to be guided into receiving tracks of
the batch-receiving cars 160. The car tracks 164, 166 correspond
to tracks 24 and 26 of the delivery car track system to transport
the batch cars 160 away from the fabric application station to
the next working station. An overhead monorail (not shown), such
as utilized for the incoming cars (monorail 32) may be used.

In the preferred embodiment, the forms 30 are constructed of polypropylene. While other materials, such as foam-
filled structure, aluminum and hard rubber may be used, polypropylene has the most advantages in that it is chemically inert,
more durable and has a larger manufacturing life. The polypropylene will not oxidize as will other forms and it will not
break, bend, dent or be easily marred as is the case with many
other materials. Furthermore, the polypropylene is self-lubricating, which improves the release characteristics thus improving both dipping and cleaning. Furthermore, the polypropylene forms can be reground and thus reshaped if a modified form is desired.

Furthermore, only minor warpage of polypropylene forms need be contended with which is not the case with the use of most other materials. This latter advantage is extremely important since the tolerances of apparatus are such that any warpage over a minimal acceptable amount would cause serious problems as the fabric liners are applied to the forms 30.

In addition to the forms, the spacer and stabilizer blocks 46 are also preferably constructed of polypropylene. As previously discussed, the blocks 46 have face portions 60 which engage snubbing track 54 to ensure the precise alignment of the forms 30, 31, 33. The use of these blocks 46 thus has two primary advantages. First, the alignment and stabilization function keeps the forms 31 aligned with the frame 112 as each of the frames 112 raise around the forms 31 to transfer the fabric liner. Secondly, the engagement of the bumper faces 60 with the snubbing track 54 stabilizes the forms and keeps forms in succeeding rows from touching one another. Thus, it will be appreciated that the guidance and stabilization system is not an integral of the form itself. Through the use of the blocks 46 and the snubbing track or rail 54, the alignment and stabilization functions are totally independent of the form and are precisely dependent on the location of the transportation track 48 and snubbing track 54. Since the tracks may be precisely located and rigidly stabilized, the alignment and stabilization of the forms is provided for.

In an alternate embodiment as shown in Figure 8, the equivalent of face 60 may be constructed on the extensions 43 of the form 30 as shown by reference numeral 61. Such an alternative construction works well provided that there is no warpage in the form itself. Where there is warpage by mounting the bumper face 61 onto the form, it is likely that the warpage will be compounded.

With respect to the overall operation, it will be appreciated that prior to the fabric application process as disclosed herein, latex sheaths are formed onto the forms 30 by a separate process such as spraying the forms or dipping them repeatedly as is required to develop the latex sheath. This part of the process may be similar to other dipping processes such as used in the production of bathing caps, latex gloves, baby pants and the like. Once the sheaths have been formed onto the polypropylene forms 30, they are transported by the monorail system to the location shown in Fig. 1 to the left of the DIP station 10. The rams 42 drive the forms 30 as carried by header bar 44 to the right and under the influence of the overhead transportation system 18 comprising the individual sequential conveyors run by conveying motors 62, 64, 66 and 68. From this point on, the operation and control of the forms is fully automatic with the various steps being electrically timed. The forms 30 are first dipped in the latex 94 at DIP station 10 for the precise time necessary to allow a thin outer-layer of latex to adhere to the latex sheath. The forms now designated as 31 pass to the STAGE area 12 where they are allowed a dwell time to permit an outer latex tack surface to develop. After this designated time, the forms are automatically transported to the FABRIC station 14 where the frames 112 apply the fabric liners to the forms. The forms with fabric liners, now designated as 33, are then transported to the ROLL station 16 where the rollers 154 roll the fabric liner against the tack latex surface of the forms. The application of the fabric and the rolling steps are precision steps as the interpenetration of the latex into the fabric liners must be controlled so as to produce a product having the characteristics of products as described in co-pending Serial No. 866,092.

After the ROLL station 16, the forms 33 as covered by the liners 126 are conveyed to the receiving cars 160 where they are transported to another work station where further processes take place beyond the scope of the subject invention. Generally, it should be appreciated that the products must be stripped from the form and any necessary further construction carried out such as the patching operations to form strength areas for garter clips and the like. It should also be appreciated that it will be desirable to cure and further treat the products by heat and chlorination treatments.

- 23 -

The subject invention may be embodied in other specific forms without departing from the spirit or essential attributes thereof, and accordingly, reference should be made to the appended claims, rather than to the foregoing specification as indicating·the scope of the invention.

- 24 -

CLAIMS

1.  Assembly apparatus for securing fabric liners to latex sheaths for girdles or the like comprising:

a first station (10) including a dip tank (86) containing latex into which forms are dipped;

a second station (14) comprising frames (112) with openings over which fabric liners (126) are placed and including means by which the frames (112) and forms (30) are moved relative to one another to enable said forms (30) to be inserted through the frame (112) openings to transfer the fabric liners(126) from said frames to said forms; and being characterized by:

a third station (16) comprising frames having finishing means (154) including means (148) by which the frames and forms are moved relative to one another to cause said finishing means (154) to smooth said fabric liners (126) on said forms; and track means (18) including means for transporting coated forms through said stations (10, 16, 18) and means for stabilizing (46) the coated forms (30).

- 25 -

2. The assembly apparatus of Claim 1 characterized further by an additional station (12) between said first and second stations providing dwell time for said forms to cause latex sheath surface to be tacky.

3. The assembly apparatus of Claim 1 or 2 wherein the means to stabilize (46) is further characterized by structure apart from said forms (30).

4. The assembly apparatus of Claim 3 wherein said means to stabilize (46) is further characterized by alignment members insertable between adjoining forms.

5. The assembly apparatus of anyone of the Claims 1 to 4 wherein said means to stabilize (46) is characterized by alignment structure on the upper portion of said forms (30).

6. The assembly apparatus of anyone of Claims 1 to 5 characterized by alignment tracks (54) engageable by said alignment members to provide stability of said forms (30).

- 26 -

7. The assembly apparatus of anyone of the Claims 1 to 6 wherein said frames 112 are characterized by openings and said frames (112) are raised to enable said openings to encircle said forms (30) thereby causing said fabric liners (126) to be engaged by said forms (30) as said frames are raised.

8. The assembly apparatus of anyone of the preceding Claims wherein said girdle forms (30) are characterized by being constructed of polypropylene.

9. The assembly apparatus of anyone of the preceding Claims wherein said finishing means (154) are characterized by being roller members.

10. The assembly apparatus of Claim 1 wherein said frames (112) and said finishing means (154) are characterized by being hydraulically raised and lowered with respect to said forms (30).

11.  Apparatus for constructing foundation garments or the like from a latex sheath including the application of a fabric liner thereto comprising:

a first work station (10) comprising a bath (86) into which forms (30) are dipped;

a second work station (14) comprising frames (112) over which fabrics (126) are stretched in inverted manner to be received by said forms (30) upon movement of said forms (30) or said frames (112) relative to one another; and being characterized by

a guidance system (18);

forms (30) detachably secured to and transportable along said guidance system (18) throughout all work stations (10, 14, 16);

a third work station (16) comprising a finishing station; and

positioning and alignment means to guide said forms, with respect to one another and said frames through said stations.

12.  The apparatus of Claim 11 wherein said forms (30) are transported by means of header bars (44) from which forms (30) hang and said positioning and alignment means is further characterized by an alignment rail (54) and wherein bumpers (60) hanging from said header bar (44) engage said alignment rail (54).

- 28 -

13.  A method of constructing foundation garments
including a relatively automatic process carried out by
assembly apparatus for attaching a seamless liner to a latex
sheath comprising the steps of:

producing, on forms, latex sheaths with
tacky outer surfaces;

transporting said forms to a fabric application
station;

aligning said forms with frames to apply
fabric liners thereon;

causing relative motion between said forms and
said frames, said fabric liner being stretched over
an opening through which said form moves to transfer
said liner from said frame to said form; and characterized
further by,

transporting said forms to a finishing station maintaining precise alignment of said forms
during critical steps of the process.

Fig.2.

Fig.1.

DIP          STAGE          FABRIC          ROLL

0057901

1/5

Fig.3

Fig.4

Fig. 5.

Fig. 6.

0057901

Fig. 7.

Fig. 8.

Fig. 9.

Fig. 11.

Fig. 10.

0057901